# EUROPEAN PATENT APPLICATION

(11) **EP 1 666 300 A2**
(43) Date of publication of application: **07.06.2006**
(21) Application number: 05380218.7
(22) Date of filing: 10.10.2005
(51) Int. Cl.: B60K 37/00, B62D 25/14

(54) **Anchorage for assembling instrument panels on the bodywork of an automotive vehicle**

(30) Priority: 02.12.2004 ES 200402752 U
(71) Applicant: Seat, S.A., 08040 Barcelona (ES)
(72) Inventor: Pradas Caulin, Angel, 08760 Martorell (Barcelona) (ES); Martos Ortega, Antonio, 08760 Martorell (Barcelona) (ES); Del Campo Melgarejo, Luis, 08760 Martorell (Barcelona) (ES)
(74) Representative: Carvajal y Urquijo, Isabel

(57) **Abstract**

An anchorage for assembling instrument panels on the bodywork of an automotive vehicle, which is made up of at least two mortises arranged on the inner surface of the panel which cooperate with as many other supports integral with the bodywork such that the mortises oppose the supports allowing the perfect coupling of the latter in the mortises.

## Description

### FIELD OF THE INVENTION

The present invention refers to an anchorage for assembling an instrument panel on the bodywork of an automotive vehicle, which panels are located on the front portion of the vehicle and run inwardly between the sides of the bodywork.

### BACKGROUND OF THE INVENTION

The assembly of the instrument panels is assured by means of different fixing elements or systems. Whatever the fixing means chosen, the prior positioning of the panel in the space provided for the same between the sides of the bodywork is necessary, in order to subsequently proceed with its fixing by means of screws, welding, etc. Usually, when placing the instrument panel on the side supports inwardly fixed to the bodywork, a reference in Z is necessary which is usually performed with a screw. The accessibility and assembly thereof is uncomfortable and difficultly practicable by the operator. Whatever the system, said operation is generally awkward and complicated for the operator or operators who have to carry it out.

### DESCRIPTION OF THE INVENTION

The present invention has as an object to simplify the instrument panel assembly operation, by means of an anchorage which allows a correct positioning of the panel, in a fast and comfortable manner.

The anchorage of the invention further allows achieving a greater rigidity in the panel assembly, which will allow reducing vibrations during the operation and running of the vehicle.

Once the instrument panel is positioned and supported with the anchorage of the invention, the fixing of the panel will be completed by means of two or three screws which do not present assembling difficulty, given that the panel is already properly placed and that these are easily accessible.

According to the invention, the anchorage for assembling instrument panels comprises at least two mortises made on the panel sides, starting from the inner surface, as many other supports integral with the bodywork projecting from the sides thereof. The mortises and supports are placed in opposing positions, according to the longitudinal direction of the vehicle, and are sized for their mutual coupling when bringing the panel progressively closer to its final assembly position and reaching said final position.

The supports may comprise in planar cantilevers projecting from the bodywork, whereas the mortises may comprise in slots of substantially the same width as the corbel width. Both the planar cantilevers and the slots will run in an substantially horizontal position.

With this makeup, when placing the panels in their assembly location and bringing them progressively closer thereto, the supports or cantilevers will be progressively introduced in the mortises or slots until their complete coupling, the cantilevers supporting the weight of the panel. The fixing screws deemed necessary to achieve a safe assembly can then be arranged.

As the supports are located on the sides of the panel, on the inner side thereof, the anchorage of the invention is completely hidden once said panel is assembled.

### BRIEF DESCRIPTION OF THE DRAWINGS

The anchorage of the invention will be better understood with the following description, made with reference to the attached drawings, in which a non-limiting embodiment is shown. In the drawings:
Figure 1 shows a top plan view of an instrument panel for an automotive vehicle.
Figure 2 shows a side elevational view of the instrument panel according to direction A in Figure 1, showing the anchorage of the invention.
Figure 3 shows a transverse cross section of the panel, following the section line III-III of Figure 1, including the anchorage of the invention.

### DESCRIPTION OF AN EMBODIMENT OF THE INVENTION

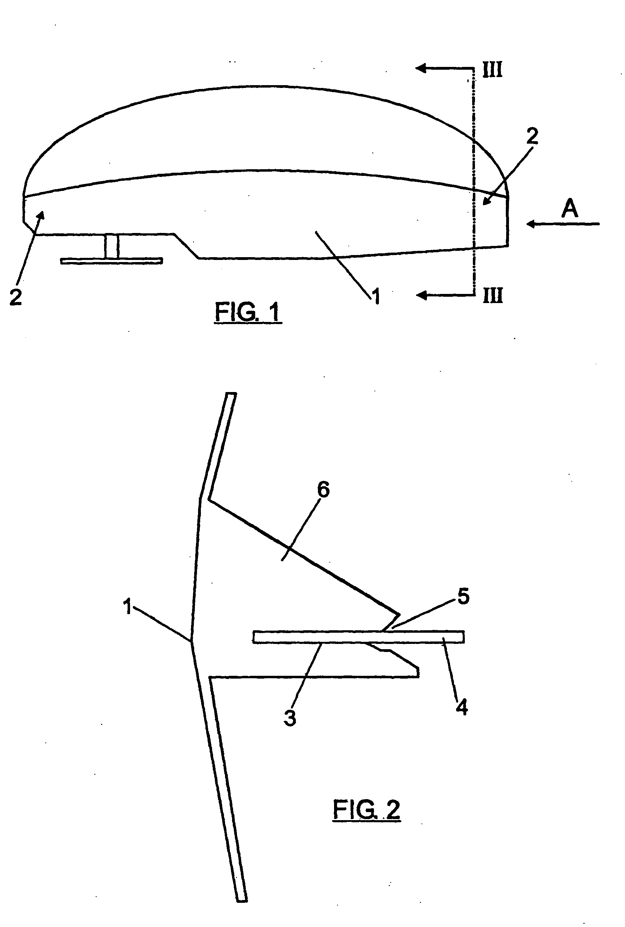

Figure 1 shows a plan view of an instrument panel 1 for an automotive vehicle, the points where the anchorage of the invention will be located being indicated with arrows 2.

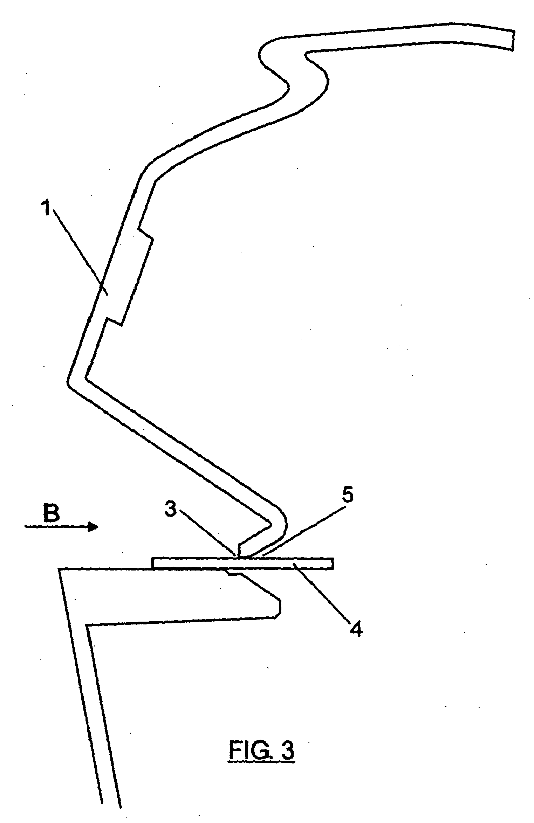

As can be observed in Figures 2 and 3, in the example of the invention these anchorages are made up by two slots referenced with number 3, performed on the sides of the panel, from its inner surface and in a direction approximately parallel to the longitudinal axis of the vehicle. The anchorage is completed with as many other planar supports or planar cantilevers 4 projecting from the sides of the bodywork of the vehicle or from elements or supports fixed thereto. The supports or cantilevers 4 are positioned and sized such that when shifting the panel 1 in direction B of Figures 2 and 3, which corresponds to the assembly direction of the panel in which the panel shifts longitudinally towards the front of the vehicle bodywork, said cantilevers 4 tightly penetrate in the mortises or slots 3. In order to facilitate this operation, the slots or mortises 3 may end in a flare 5.

Thus, panel 1 forms on its sides a type of clamp 6, defined by the slot or mortise 3, in which the cantilever or support 4 projecting from the sides of the bodywork tightly penetrates.

In order to assemble panel 1 according to this fixing or anchoring system, it will be enough to bring panel 1 close to the assembly position such that the cantilevers or supports 4 penetrate in the slots 3, the panel thus being supported by said supports or cantilevers 4. It will then be sufficient to arrange the screws deemed necessary in order to achieve a secure fixing.

The anchorage of the invention, involving the slot and the support or cantilevers 4, remains hidden once the panel is assembled, without therefore affecting the aesthetics thereof.

On the other hand, the anchorage of the invention provides greater rigidity to the assembly and fixing of the panel, which will translate into a reduction of vibrations during vehicle operation.

Although in the example described the support 4 adopts the shape of a planar and horizontal cantilevers, it could adopt a different configuration, the configuration and size of the slot 3 varying accordingly, such that it is configured in the manner of a mortise for receiving the support 4.

## Claims

1. An anchorage for assembling instrument panels on the bodywork of an automotive vehicle, which panel (1) runs inwardly on the sides of the bodywork, **characterised in that** it is made up of at least two mortises (3) that the panel (1) has on its sides, from the inner surface thereof, and in as many other supports (4) integral with the bodywork, which project from the sides thereof; the mortises and supports of which are placed in opposing positions, according to the longitudinal direction of the vehicle, and sized for their mutual coupling when bringing the panel (1) close to its final assembly position and reaching said final position.

2. An anchorage according to claim 1, **characterised in that** said supports (4) consist in planar corbels projecting from the bodywork and the mortises (3) consist in slots of approximately the same width as the corbels.

3. An anchorage according to claim 2, **characterised in that** said planar corbels (4) and slots (3) run in an approximately horizontal position.
